# EUROPÄISCHE PATENTSCHRIFT

(11) **EP 1 931 895 B1**
(45) Veröffentlichungstag und Bekanntmachung des Hinweises auf die Patenterteilung: **10.12.2008**
(21) Anmeldenummer: 06792809.3
(22) Anmeldetag: 14.08.2006
(51) Int. Cl.: F16H 57/02

(54) **GETRIEBE-ANTRIEBSEINHEIT MIT EINER AXIALSPIELFREIEN LAGERBEFESTIGUNG, INSBESONDERE ZUM VERSTELLEN EINES BEWEGLICHEN TEILS IM KRAFTFAHRZEUG**
TRANSMISSION DRIVE UNIT WITH A ZERO AXIAL BACKLASH BEARING FASTENING, ESPECIALLY FOR ADJUSTING A MOBILE PART IN THE MOTOR VEHICLE
UNITE DE TRANSMISSION ET D'ENTRAINEMENT A FIXATION DE PALIER SANS JEU AXIAL, UTILISEE NOTAMMENT POUR DEPLACER UNE PARTIE MOBILE DANS UNE AUTOMOBILE

(30) Priorität: 28.09.2005 DE 102005046354
(43) Veröffentlichungstag der Anmeldung: 18.06.2008
(73) Patentinhaber: ROBERT BOSCH GMBH, 70442 Stuttgart (DE)
(72) Erfinder: OBERLE, Hans-Juergen, 76437 Rastatt (DE); LIENIG, Andreas, 77815 Buehl (DE); MUELLER, Peter, 77794 Lautenbach (DE)
(86) Internationale Anmeldenummer: PCT/EP2006/065282
(87) Internationale Veröffentlichungsnummer: WO 2007/036387

(56) Entgegenhaltungen:
- WO-A-02/19502
- WO-A-20/04040735
- WO-A-20/06032584
- DE-A1- 19 537 503
- DE-A1- 19 854 535
- DE-A1- 19 926 171

## Beschreibung

### Stand der Technik

Die Erfindung betrifft eine Getriebe-Antriebseinheit mit einer axialspielfreien Lagerbefestigung insbesondere zum Verstellen eines beweglichen Teils im Kraftfahrzeug, nach Anspruch 1, und ein Verfahren zum Herstellen einer solchen Einheit nach Anspruch 13.

Mit der DE 198 545 35 A1 ist eine Antriebsvorrichtung für eine Scheibenwischanlage eines Kraftfahrzeugs bekannt geworden, die ein Gehäuse und eine darin drehbar gelagerte Ankerwelle mit einer Schnecke aufweist. Mittels einer Axialkrafterzeugungseinrichtung wird hierbei ein Keilschieber radial zur Ankerwelle verschoben, um das Axialspiel der Ankerwelle auszugleichen. Die Verschiebekraft des Keilschiebers wird durch ein vorgespanntes Federelement aufgebracht, das den Keilschieber radial gegen einen Anschlag der Ankerwelle drückt, wodurch diese bis zum Ausgleich des Axialspiels axial verschoben wird. Bei einer starken Belastung der Ankerwelle durch ein Abtriebsrad tritt eine Axialkraft auf, mit der die Ankerwelle gegen den Keilschieber gepresst wird. Dieser wird dabei radial von der Ankerwelle weg gegen das Federelement zurück gedrückt. Solch eine starke Dauerbelastung des Federelements führt dazu, dass dessen Lebensdauer, bzw. dessen elastische Eigenschaften nachlassen und daher das Axialspiel der Ankerwelle nicht mehr ausgeglichen wird, so dass sie sich unter Belastung axial hin und her bewegt, was zu unangenehmen Klack-Geräuschen führen kann. Ein solcher Keilschieber eignet sich auch nicht für die spielfreie Axiallagerung eines Antriebselements in einem weitgehend geschlossenen Trägerrohr, das keinen Deckel aufweist, der radial zur Lagerachse montiert wird.

### Vorteile der Erfindung

Die erfindungsgemäße Getriebe-Antriebseinheit und deren erfindungsgemäßes Herstellungsverfahren mit den Merkmalen der unabhängigen Ansprüche haben den Vorteil, dass durch die Anordnung des Antriebsrads der Spindel in einem Trägerrohr eine separate standardisierte Baugruppe geschaffen wird, die unabhängig ist von einem Getriebegehäuse oder dem Antriebsaggregat. Durch den Verzicht auf ein herkömmliches Getriebegehäuse, bei dem das Abtriebselement des Antriebsaggregats und das Antriebsrad der Spindel gemeinsam in einem geschlossenen Gehäuse angeordnet sind, kann die Getriebe-Antriebseinheit als modulares Baukastensystem sehr flexibel an unterschiedliche Befestigungsvorrichtungen der kundenspezifischen Anwendungen angepasst werden. Dabei kann immer die gleiche vormontierte Baugruppe mit dem Standard-Trägerrohr verwendet werden, wobei die mechanische Schnittstelle zur Befestigung der Getriebe-Antriebseinheit an der Karosserie oder an einem zu verstellenden Teil mittels eines kundenspezifischen Aufnahmemoduls für die Befestigungsvorrichtung nachträglich einfach variiert werden kann. Durch das Verformen des Wandmaterials des Trägerrohrs kann das Lagerschild sehr zuverlässig in einer definierten Position gehalten werden, nachdem zuvor das Axialspiel eliminiert wurde. Die Materialumformung des Trägerrohrs ermöglicht es, sehr hohe, auf das Antriebselement einwirkende axiale Kräfte auf das Trägerrohr abzuleiten.

Durch die in den Unteransprüchen aufgeführten Maßnahmen ergeben sich vorteilhafte Weiterbildungen und Verbesserungen der in den unabhängigen Ansprüchen angegebenen Merkmale. Wird das Mantelrohr radial nach innen gepresst, kann das Lagerschild praktisch unabhängig von der axialen Anpresskraft zur Längsspieleliminierung axial fixiert werden. Dabei wird die Lagerschildbefestigung nicht durch die fertigungsbedingten Toleranzen der zu lagernden Bauteile beeinflusst, wodurch das Lagerspiel zuverlässig unterbunden werden kann. Des Weiteren ist zur Lagerfixierung kein zusätzliches Bauteil notwendig, wodurch die Fertigung der Antriebseinheit kostengünstiger ist.

Von Vorteil ist es, das Wandmaterial des Mantelbereichs radial derart einzudrücken, dass eine axiale Stirnfläche als Hinterschnitt gebildet wird, der am Lagerschild axial anliegt. Dabei kann in Abhängigkeit der auftretenden Axialkräfte die Breite und Tiefe des Hinterschnitts über die Stärke und Wirkungsdauer der Verstemmkraft variiert werden, ohne dass hierfür konstruktive Änderungen notwendig sind. Bildet der Hinterschnitt eine näherungsweise senkrecht zur Spindel ausgerichtete Stirnfläche, wird diese nur auf Scherung beansprucht, wodurch die Materialumformung auch bei hohen Axialkräften nicht in radialer Richtung zurückverformt werden kann. Dadurch wird ein Axialspiel wirksam unterbunden.

Durch die Anordnung der Mantelbereiche im Bereich des Trägerrohrs mit dem maximalen Durchmesser, lassen sich einfach mehrere Materialverformungen anbringen und deren Abmessungen leichter variieren. Außerdem wird durch den maximalen radialen Abstand zur Antriebsachse eine zuverlässigere Befestigung des Lagerschilds erzielt.

Wird das Wandmaterial des Trägerrohrs derart radial eingedrückt, dass sich eine Lasche mit einem freien Ende bildet, kann dieses freie Ende das Lagerschild zuverlässig axial fixieren.

Verfahrenstechnisch kann das Wandmaterial besonders günstig mittels eines Verstemmwerkzeugs verformt werden, das radial auf die Mantelfläche des Trägerrohrs einwirkt. Dadurch kann ein Formschluss erzeugt werden, der das Lagerschild axial und gegebenenfalls auch in Umfangsrichtung fixiert.

Zur Minimierung der Reibung kann das Antriebselement besonders günstig näherungsweise punktförmig axial am Lagerschild gelagert werden. Dazu weist das axiale Ende des Antriebselements - insbesondere einer Drehspindel - als zweiten axialen Anschlag eine gewölbte Fläche auf, die beispielsweise als integrierte Kugel ausgebildet ist.

In einer Variation der Erfindung weist hierzu das Lagerschild eine Anlauffläche in einem härteren Material auf, als der Rest des Lagerschilds. Diese harte Anlauffläche kann beispielsweise durch die Integration einer separat gefertigten Anlaufscheibe realisiert werden.

Für die Anwendung einer durchtauchenden Spindel, die an beiden Seiten aus dem Trägerrohr ragt, kann das Antriebselement in einfacher Weise mittels eines umlaufenden Anschlagbunds axial gelagert werden, der am Lagerschild angeformt ist. Dabei liegt der Lagerbund radial möglichst nah an dem axialen Loch des Lagerschilds, durch das das Antriebselement bzw. die Welle durchgeführt ist.

Zur radialen Lagerung weist das Lagerschild eine hülsenförmige innere Mantelfläche auf, an dem das Antriebselement radial anliegt. Dadurch kann die axiale und radiale Lagerung vorteilhaft durch ein Bauteil realisiert werden.

Die erfindungsgemäße Lagerung des Antriebselements eignet sich besonders für ein Antriebsrad, das drehbar oder drehfest auf einer Welle gelagert ist. Hierbei kann die Welle direkt am Lagerschild anliegen, oder indirekt über das darauf gelagerte Antriebsrad sich am Lagerschild abstützen.

Ist die Getriebe-Antriebseinheit als Spindelantrieb ausgebildet, bei der die Welle eine Spindel ist, treten besonders hohe Axialkräfte auf. Diese können mittels der erfindungsgemäßen Materialumformung des Trägerrohrs zur Axialspieleliminierung besonders vorteilhaft aufgenommen werden.

Das Trägerrohr ist günstiger Weise als Standard-Bauteil ausgebildet, in das als separate Baugruppe das Antriebsrad mit dem Lagerschild vormontiert werden. Dazu ist am Trägerrohr an einem Ende eine topfförmige Lageraufnahme ausgebildet, die die erste Lagerfläche für das Antriebselement bildet. Die Materialumformung wird dann am gegenüberliegenden Ende des Trägerrohrs mit dem größeren Durchmesser angeformt, an dem das eingefügte Lagerschild fixiert wird.

Das erfindungsgemäße Herstellungsverfahren nach dem unabhängigen Anspruch 13 hat den Vorteil, dass das Verstemmen des Mantelrohrs zur Ausbildung eines Formschlusses mit dem Lagerschild entkoppelt ist vom Einwirken der Vorhaltekraft auf das Lagerschild. Dadurch kann das Axialspiel unabhängig von Fertigungstoleranzen der einzelnen Bauteile zuverlässig unterbunden werden.

Aufgrund des Verstemmprozesses kann die Lagerfixierung ohne zusätzlichen Aufwand an unterschiedliche Festigkeitsanforderungen bzw. unterschiedlichen einwirkenden Axialkräften sehr flexibel angepasst werden. Dies kann beispielsweise sehr einfach durch den radialen Vorschub des Stempelwerkzeugs gesteuert werden, wodurch sich ein unterschiedlich großer Hinterschnitt für die axiale Abstützung des Lagerschilds ergibt.

Das erfindungsgemäße Herstellungsverfahren ist auch auf eine Ausführung eines Trägerrohrs mit einer versteifenden Bodenfläche anwendbar, in der eine Montageöffnung ausgeformt ist. Nach dem Einbau des Lagerschilds und des Antriebsrads in das Trägerrohr kann durch die Montageöffnung eine Anpresskraft auf das Lagerschild ausgeübt werden, um das Lagerspiel zu eliminieren. Nach dem radialen Verstemmen der Mantelwand des Trägerrohrs ist das Lagerschild zuverlässig fixiert, sodass die bei der Montage aufgewendete Anpresskraft wieder entfernt werden kann.

### Zeichnungen

In den Zeichnungen sind verschiedene Ausführungsbeispiele einer erfindungsgemäßen Getriebe-Antriebseinheit dargestellt und in der nachfolgenden Beschreibung näher erläutert. Es zeigen:
- Figur 1: ein Schnitt durch eine erfindungsgemäße Getriebe-Antriebseinheit,
- Figur 2 und 3: eine Schnittdarstellung und eine Ansicht eines weiteren Ausführungsbeispiels, und
- Figur 4: einen Schnitt eines weiteren erfindungsgemäßen Spindelantriebs.

### Beschreibung

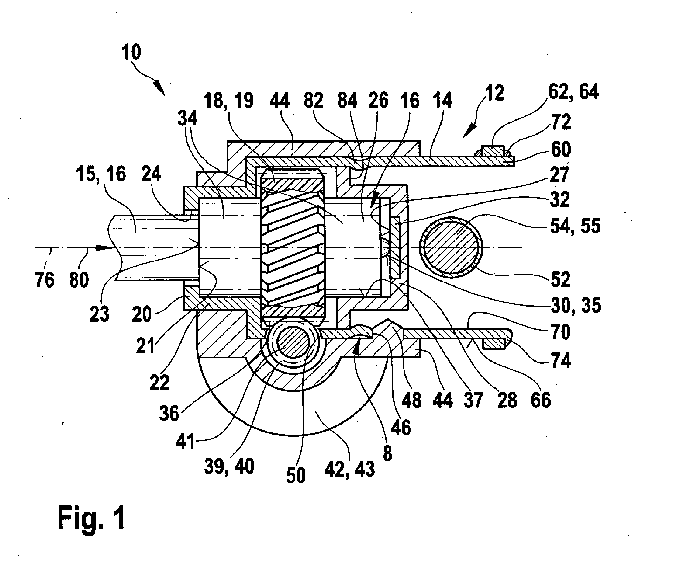

Die in Figur 1 dargestellte Getriebe-Antriebseinheit 10 besteht aus einer ersten Baugruppe 12, bei der in einem Trägerrohr 14 eine als Spindel 16 ausgebildeten Welle 15 mit einem darauf angeordneten Antriebselement 18 gelagert ist, das als Schneckenrad 19 ausgebildet ist. Das Trägerrohr 14 ist beispielsweise mittels Tiefziehen hergestellt und weist an einem Endbereich 20 eine topfförmige Lageraufnahme 22 für das Antriebselement 18 auf. Die Spindel 16 ragt durch eine Öffnung 24 in der topfförmigen Lageraufnahme 22 aus dem Trägerrohr 14 heraus und ist beispielsweise über eine hier nicht dargestellte Gewindemutter 98 mit der Karosserie 99 verbunden. Bei diesem Ausführungsbeispiel befindet sich das andere Spindelende 26 innerhalb des Trägerrohrs 14 und wird axial und radial mittels eines Lagerschilds 28 gelagert, das innerhalb des Trägerrohrs 14 an dessen Innenwand 70 befestigt ist. Hierzu sind Mantelbereiche 8 des Trägerrohrs 14 radial nach innen umgeformt, so dass die Bereiche der Materialumformung 82 einen Formschluss mit der sich radial erstreckenden Rückseite 84 des Lagerschilds 28 bilden. Dadurch wird das Lagerschild 28 gegen das Antriebselement 18, und dieses gegen den Lagertopf 22 des Trägerrohrs 14 gepresst, wodurch das Axiallängsspiel des Antriebselements 18 unterdrückt wird. Das Spindelende 26 weist beispielsweise eine kugelförmige Anlauffläche 30 auf, die axial im topfförmigen Lagerschild 28 anliegt. Optional kann im Lagerschild 28 eine Anlaufscheibe 32 mit erhöhter Festigkeit angeordnet werden. Das Antriebselement 18 ist als Schneckenrad 19 ausgebildet, das zur radialen Lagerung axiale Fortsätze 34 aufweist, die an einer zylindrischen Mantelfläche 37 des Lagerschilds 28 anliegen. Das Antriebselement 18 ist beispielsweise aus Kunststoff direkt auf die Spindel 16 aufgespritzt und weist eine Verzahnung 36 auf, die mit einem Abtriebselement 40 eines Antriebsaggregats 42 kämmt. Das Antriebsaggregat 42 ist als Elektromotor 43 ausgebildet und ist mittels einer Kopplungsvorrichtung 44 mit der ersten Baugruppe 12 verbunden. Das Trägerrohr 14 weist zur Positionierung gegenüber der Kopplungsvorrichtung 44 eine Ausformung 46 auf, in die ein entsprechendes Fixierelement 48 der Kopplungsvorrichtung 44 eingreift. Zur Übertragung des Drehmoments vom Antriebsaggregat 42 auf die separate Baugruppe 12 weist das Trägerrohr 14 eine radiale Aussparung 50 auf, in die das Abtriebselement 40 eingreift. Das Abtriebselement 40 ist beispielsweise als Schnecke 39 ausgebildet, die auf einer Ankerwelle 41 des Elektromotors 43 angeordnet ist.

Das Trägerrohr 14, das praktisch ein Gehäuse für die separate Baugruppe 12 bildet, weist des Weiteren eine Aufnahme 52 auf, in die eine Befestigungsvorrichtung 54 - beispielsweise ein Gelenkbolzen 55 - einschiebbar ist. Mit dieser Befestigungsvorrichtung 54 ist das Trägerrohr 14 beispielsweise gelenkig mit einem verstellenden Teil 58 im Kraftfahrzeug verbunden, beispielsweise ein nicht näher dargestellter Sitz oder ein Sitzteil, das gegenüber einem anderen Sitzteil verstellt wird. Zwischen der Aufnahme 52 und einem diesem näher liegenden Ende 60 des Trägerrohrs 14 ist ein Stützelement 62 am Trägerrohr 14 befestigt. Das Stützelement 62 ist als Außenring 64 ausgebildet, der in einer äußeren Umfangsfläche 66 des Trägerrohrs 14 anliegt. In der oberen Bildhälfte ist das Stützelement 62 beispielsweise mittels Schweißnähten 72 mit dem Trägerrohr 14 verbunden. Die untere Bildhälfte zeigt eine Befestigung des Stützelements 62 mittels einer Verstemmung 74 durch plastische Verformung. Bei einem Auffahrunfall tritt zwischen der Aufnahme 52 und dem Ende 60 des Trägerrohrs 14 eine hohe Materialbelastung auf. Diese erhöhten Kräfte werden durch das Stützelement 62 aufgenommen, das damit die zerstörungsfreie Kraftaufnahme des Trägerrohrs 14 erhöht. Dadurch bleibt das Spindelende 26 und damit das zu verstellende Teil 58 auch im Crash-Fall an seinem bestimmungsgemäßen Ort.

Wirkt nun bei einem Verstellvorgang in axialer Richtung 76 eine Druckkraft 80 auf die Spindel 16 ein, wird die Welle 15 über das Antriebselement 18 in der topfförmigen Lageraufnahme 22 des Lagerschilds 28 abgestützt. Die Druckkraft 80 wird über das Lagerschild 28 auf die Materialumformung 82, und damit auf das Trägerrohr 14 übertragen, das sich wiederum an der auf die Befestigungsvorrichtung 54 abstützt.

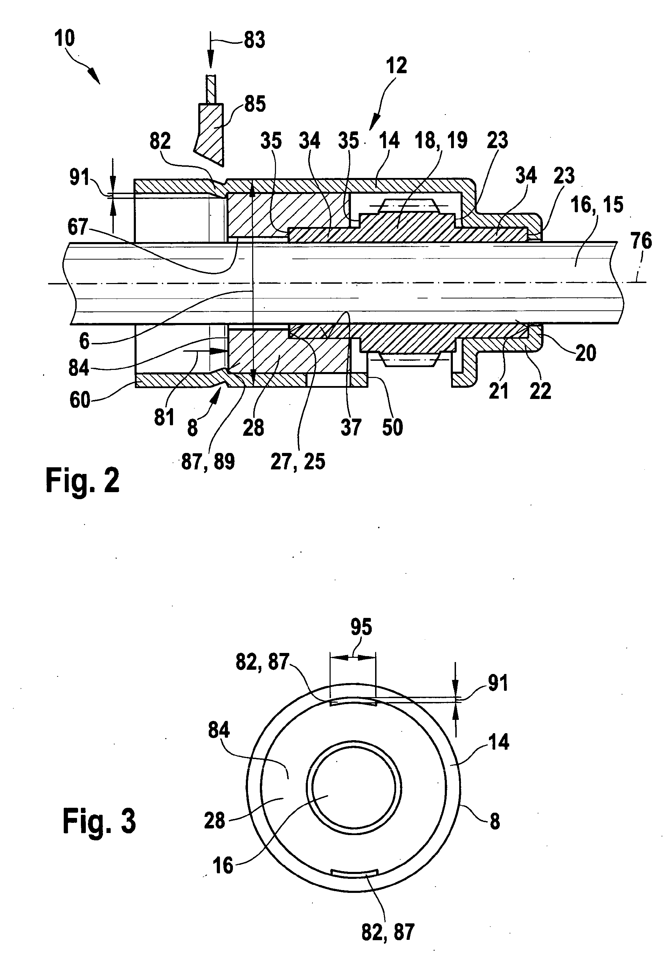

In den Figuren 2 und 3 ist ein weiteres Ausführungsbeispiel dargestellt, bei dem als Antriebselement 18 ein auf einer durchtauchenden Spindel 16 gelagertes Schneckenrad 19 ausgebildet ist. Die als Spindel 16 ausgebildete Welle 15 ist entlang einer Achse 76 angeordnet. Das Trägerrohr 14 weist wie in Figur 1 eine topfförmige Lageraufnahme 22 mit einer ersten axialen Lagerfläche 21 auf, an der das Antriebselement 18 mit einem ersten axialen Anschlag 23 anliegt. Das zweite Lagerschild 28 ist als Hülse mit einem umlaufenden Bund 25 ausgebildet, der als zweite axiale Lagerfläche 27 für einen zweiten Anschlag 35 des Antriebselements 18 dient. Das Antriebselement 18 und das Lagerschild 28 werden zuerst in dem Trägerrohr 14 vormontiert und anschließend das Lagerschild 28 derart im Trägerrohr 14 fixiert, dass das axiale Lagerspiel des Antriebselements 18 unterdrückt ist. Hierzu wird das hülsenförmige Lagerschild 28 mit einer vordefinierten Anpresskraft 81 gegen das Antriebselement 18 und die erste Lagerfläche 21 gepresst. Anschließend werden die Mantelbereiche 8 des Trägerrohrs 14 mittels eines Stempelwerkzeugs 85 radial nach innen gedrückt, wodurch ein Hinterschnitt 87 entsteht, der mit einer axialen Stirnfläche 89 axial am Lagerschild 28 anliegt. In Abhängigkeit der vom Stempelwerkzeug 85 aufgebrachten Verstemmkraft 83 weist die Stirnfläche 89 eine bestimmte radiale Tiefe 91 und eine gewisse Breite 95 über den Umfang des Trägerrohrs 14 auf. über die Festlegung der Tiefe 91 bund der Breite 95 der Stirnfläche 89, sowie der Anzahl der Materialumformung 82 kann die Getriebe-Antriebseinheit 10 an die zu erwartenden maximalen Axialkräften 80 angepasst werden. Das Lagerschild 28 weist einen zentralen Durchbruch 67 auf, der von der Spindel 16 durchdrungen wird. Das Lagerschild 28 liegt über seine gesamte axiale Ausdehnung radial an der Innenwand 70 an und weist eine ringförmige Rückseite 84 auf. Die Stirnfläche 89 des Hinterschnitts 87 bildet mit der Rückseite 84, die in etwa senkrecht zur Welle 15 ausgerichtet ist, einen axialen Formschluss, der das Antriebselement 18 im Trägerrohr 14 axial zuverlässig fixiert.

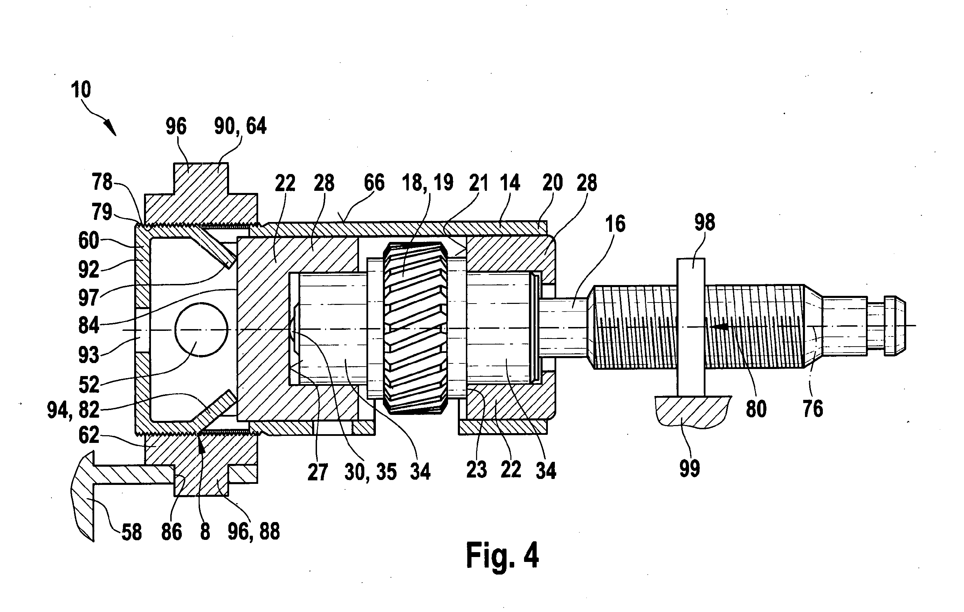

Figur 4 zeigt ein weiteres Ausführungsbeispiel einer erfindungsgemäßen Getriebe-Antriebseinheit 10, bei dem das Trägerrohr 14 an einem Ende 60 eine weitgehend geschlossene Bodenfläche 92 aufweist. In der Bodenfläche 92 ist eine Montageöffnung 93 ausgebildet, um die zuverlässige Lagerung der Spindel 16 im Lagerschild 28 zu erleichtern. Hierzu wird das Lagerschild 28 mit der zweiten angeformten axialen Lagerfläche 27 und das Antriebselement 18 im Trägerrohr 14 vormontiert. Am Ende 20, an dem die Spindel 16 aus dem Trägerrohr 14 ragt, ist bei dieser Ausführung ein zweites separates Lagerschild 28 mit einer topfförmigen Lageraufnahme 22 im Trägerrohr 14 angeordnet, das die erste Lagerfläche 21 bildet. Die erste Lagerfläche 21 wird über das Lagerschild 28 axial fest im Trägerrohr fixiert. Zur Beseitigung des axialen Lagerspiels wird nun das Lagerschild 28 mit der zweiten axialen Lagerfläche 27 mit einer Vorspannkraft 81 axial gegen das Antriebselement 18 gedrückt, das sich an der ersten Lagerfläche 21 abstützt. Die Vorspannkraft 81 wird dabei durch die Montageöffnung 93 auf das Lagerschild 28 eingeleitet. Nun werden die Mantelbereiche 8 des Trägerrohrs 14 radial nach innen eingedrückt, so dass Stemmlaschen 94 mit einem freien Ende 97 gebildet werden, die sich jeweils axial an der Rückseite 84 des Lagerschilds 28 abstützten. Durch diese Materialumformung 82 wird das Lagerschild 28 axial fest gegen den zweiten Anschlag 35 des Antriebsrads 18 gepresst, sodass dieses kein Spiel mehr hat.

Im Trägerrohr 14 ist direkt eine Aufnahme 52 für eine Befestigungsvorrichtung 54 angeformt, die als radiale Bohrung ausgebildet ist. Hierbei stellt die Aufnahme 52 eine Standard-Schnittstelle zum Kunden dar, die jedoch mittels eines Aufnahmemoduls 90 in eine kundenspezifische, individuelle Aufnahme 88 abgeändert werden kann. Hierzu ist das Aufnahmemodul 90 als Außenring 64 ausgebildet, der auf der äußeren Umfangsfläche 66 des Trägerrohrs 14 angeordnet ist. Das Aufnahmemodul 90 weist beispielsweise ein Innengewinde 78 auf, das in das als Außengewinde ausgebildete Gegengewinde 79 des Trägerrohrs 14 greift. Das Aufnahmemodul 90 überdeckt die radialen Ausschnitte, die durch die Aufnahme 52 und die Verstemmlaschen 94 im Trägerrohr 14 eingeschnitten sind. Das Aufnahmemodul 90 stellt bei dieser Ausführung gleichzeitig ein Stützelement 62 dar, das die Festigkeit des Trägerrohrs 14 an dessen Endbereich 60 erhöht. Das Aufnahmemodul 90 weist als Aufnahme 88 einen zylindrischen Bolzen 96 auf, der sich radial nach außen erstreckt. Dieser zylindrische Bolzen 96 entspricht einer Integration des als Befestigungsvorrichtung 54 ausgebildeten Gelenkbolzen 55 in Figur 1. Mit dieser Aufnahme 88 kann beispielsweise direkt das zu verstellende Teil 58 über daran angeformte Augen 86 mit dem Spindelantrieb 10. verbunden werden. Durch das Aufnahmemodul 90 werden die Crash-Kräfte sicher vom Verstell- Teil 58 auf das Trägerrohr 14 und über die Spindel 16 und die Gewindemutter 98 auf die Karosserie 99 übertragen.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise das Trägerrohr 14 in unterschiedlichen Verfahren hergestellt werden und unterschiedliche konkrete Ausformungen aufweisen. Der Querschnitt des Trägerrohrs 14 ist nicht auf einen Kreis beschränkt. Anstatt einer angeformten topfförmigen Lageraufnahme 22 kann das Trägerrohr 14 auch als glattes Zylinderrohr ausgebildet sein, in das zwei separate Lagerschilde 28 für die Lagerung der Spindel 16 angeordnet werden. Die Spindel 16 wird vorzugsweise über das darauf gelagerte Antriebselement 18 gelagert, kann in einer Variation aber auch mittels Lagerflächen gelagert werden, die direkt an der Spindel 16 angeformt sind. Die Momentübertragung vom Antriebsaggregat 42 ist nicht auf ein Schneckengetriebe 19, 39 beschränkt, sondern kann beispielsweise auch mittels eines Stirnradgetriebes übertragen werden. Die konkrete Form und Werkstoffauswahl der Materialumformung 82 wird entsprechend der Festigkeitsanforderung gewählt, wobei nach Bedarf ein oder mehrere Hinterschnitte 87 oder Verstemmlaschen 94 eingedrückt werden können. Ebenso kann die Größe der axialen Stirnfläche 89 über deren Tiefe 91 und Breite 95 entsprechend gewählt werden, wodurch die Stärke des Formschlusses mit der sich radial erstreckenden Rückseite 84 des Lagerschilds 28 vorgebbar ist.

## Patentansprüche

1. Getriebe-Antriebseinheit (10), insbesondere zum Verstellen eines beweglichen Teils (58) im Kraftfahrzeug, mit einem mittels eines Antriebsaggregats (42) antreibbaren Antriebselement (18), das mittels mindestens eines Lagerschilds (28) drehbar in einem Trägerrohr (14) gelagert ist, wobei das Antriebselement (18) einen ersten axialen Anschlag (23) aufweist, der sich an einer ersten axialen Lagerfläche (21) des Trägerrohrs (14) abstützt und das Antriebselement (18) einen zweiten axialen Anschlag (35) aufweist, der an einer zweiten axialen Lagerfläche (27) des Lagerschilds (28) anliegt, wobei das Lagerschild (28) mittels Materialumformung (82) des Trägerrohrs (14) gegen den zweiten axialen Anschlag (35) des Antriebselements (18) gepresst wird.

2. Getriebe-Antriebseinheit (10) nach Anspruch 1, **dadurch gekennzeichnet, dass** die Materialumformung (82) durch radial nach innen geformte Mantelbereiche (8) des Trägerrohrs (14) gebildet ist, wobei die Mantelbereiche (8) insbesondere im Bereich eines maximalen Durchmessers (6) des Trägerrohrs (14) angeordnet sind.

3. Getriebe-Antriebseinheit (10) nach Ansprüch 2, **dadurch gekennzeichnet, dass** die Materialumformung (82) des Mantelbereichs (8) als Hinterschnitt (87) ausgebildet ist, bei dem mindestens eine eingedrückte Stirnfläche (89) des Mantelbereichs (8) über eine bestimmte Breite (95) und eine bestimmte Tiefe (91) axial an dem Lagerschild (28) anliegt.

4. Getriebe-Antriebseinheit (10) nach Aspruch 3, **dadurch gekennzeichnet, dass** die Stirnfläche (89) bündig an einer Rückseite (84) des Lagerschilds (28) anliegt, die sich näherungsweise senkrecht zur Achse (76) des . Antriebselements (18) erstreckt.

5. Getriebe-Antriebseinheit (10) nach einem der Ansprüche 2-4, **dadurch gekennzeichnet, dass** die Materialumformung (82) des Mantelbereichs (8) aus mindestens einer Lasche (94) mit einem freien Ende (97) gebildet ist, das axial an dem Lagerschild (28) anliegt.

6. Getriebe-Antriebseinheit (10) nach einem der vorhergehenden Ansprüche, **dadurch gekennzeichnet, dass** das Antriebselement (18) punktförmig - insbesondere mittels eines Kugelanlaufs (30) - an dem Lagerschild (28) anliegt.

7. Getriebe-Antriebseinheit (10) nach einem der vorhergehenden Ansprüche, **dadurch gekennzeichnet, dass** das Antriebselement (18) axial an einem umlaufenden Bund (25) des Lagerschilds (28) anliegt, der insbesondere ein axiales Loch (67) des Lagerschilds (28) umschließt, durch das das Antriebselement (18) ragt.

8. Getriebe-Antriebseinheit (10) nach einem der vorhergehenden Ansprüche, **dadurch gekennzeichnet, dass** das Lagerschild (28) eine innere zylindrische Mantelfläche (37) aufweist, die das Antriebselement (18) radial abstützt.

9. Getriebe-Antriebseinheit (10) nach einem der vorhergehenden Ansprüche, **dadurch gekennzeichnet, dass** das Lagerschild (28) eine Anlaufscheibe (32) aufweist, die aus einem härteren Material gebildet ist, als das Lagerschild (28).

10. Getriebe-Antriebseinheit (10) nach einem der vorhergehenden Ansprüche, **dadurch gekennzeichnet, dass** das Antriebselement (18) als ein auf einer Welle (15) angeordnetes Schneckenrad (19) oder Stirnrad ausgebildet ist.

11. Getriebe-Antriebseinheit (10) nach Anspruch 10, **dadurch gekennzeichnet, dass** die Welle (15) als Spindel (16) ausgebildet ist, die insbesondere auf beiden Seiten (20, 60) aus dem Trägerrohr (14) ragt.

12. Getriebe-Antriebseinheit (10) nach einem der Ansprüche 10 oder 11, **dadurch gekennzeichnet, dass** die erste Lagerfläche (21) des Trägerrohrs (14) als topfförmige Lageraufnahme (22) mit einer axialen Öffnung (24) für die Welle (15) gebildet ist, wobei die Lageraufnahme (22) insbesondere einstückig an das Trägerrohr (14) - vorzugsweise mittels eines Tiefziehverfahren - angeformt ist.

13. Verfahren zum Herstellen einer Getriebe-Antriebseinheit (10) nach einem der vorhergehenden Ansprüche, **gekennzeichnet durch** folgende Schritte:
- das Antriebselement (18) und das Lagerschild (28) werden in das Trägerrohr (14) eingefügt
- das Lagerschild (28) wird mit einer definierten Vorhaltekraft (81) axial gegen das Antriebselement (18) gepresst, so dass sich dieses an der ersten Lagerfläche (21) des Trägerrohrs (14) abstützt
- die Mantelbereiche (8) des Trägerrohrs (14) werden in radialer Richtung mittels einer Verstemmkraft 83 verstemmt, um einen Formschluss zwischen dem Lagerschild (28) und dem Mantelbereich (8) zu erzeugen und **dadurch** das Lagerschild (28) zu fixieren.

14. Verfahren nach Anspruch 13, **dadurch gekennzeichnet dass** der Mantelbereich (8) radial so weit eingedrückt wird, bis sich ein Hinterschnitt (87) mit einer sich etwa senkrecht zum Trägerrohr (14) erstreckenden Stirnfläche (89) bildet, die über eine bestimmte Breite (95) und eine bestimmte Tiefe (91) axial an dem Lagerschild (28) anliegt.

15. Verfahren nach einem der Ansprüche 13 oder 14, **dadurch gekennzeichnet dass** das Trägerrohr (14) eine Bodenfläche (92) mit einer Montageöffnung (93) aufweist, durch die die Vorhaltekraft (81) auf das im Trägerrohr (14) vormontierte Lagerschild (28) aufgebracht wird.

## Claims

1. Gearing/drive unit (10), in particular for adjusting a movable part (58) in a motor vehicle, having a drive element (18) which can be driven by means of a drive assembly (42) and which is rotatably mounted by means of at least one bearing shield (28) in a carrier tube (14), with the drive element (18) having a first axial stop (23) which is supported against a first axial bearing surface (21) of the carrier tube (14) and the drive element (18) having a second axial stop (35) which bears against a second axial bearing surface (27) of the bearing shield (28), with the bearing shield (28) being pressed by means of material deformation (82) of the carrier tube (14) against the second axial stop (35) of the drive element (18).

2. Gearing/drive unit (10) according to Claim 1, **characterized in that** the material deformation (82) is formed by radially inwardly formed casing regions (8) of the carrier tube (14), with the casing regions (8) being arranged in particular in the region of a maximum diameter (6) of the carrier tube (14).

3. Gearing/drive unit (10) according to Claim 2,
**characterized in that** the material deformation (82) of the casing region (8) is formed as an undercut (87) in which at least one pressed-in end surface (89) of the casing region (8) bears axially against the bearing shield (28) over a certain width (95) and a certain depth (91).

4. Gearing/drive unit (10) according to Claim 3, **characterized in that** the end surface (89) bears flush against a rear side (84) of the bearing shield (28), which rear side (84) extends approximately perpendicular to the axis (76) of the drive element (18).

5. Gearing/drive unit (10) according to one of Claims 2-4, **characterized in that** the material deformation (82) of the casing region (8) is formed from at least one lug (94) with a free end (97) which bears axially against the bearing shield (28).

6. Gearing/drive unit (10) according to one of the preceding claims, **characterized in that** the drive element (18) bears against the bearing shield (28) in a punctiform fashion - in particular by means of a spherical thrust portion (30).

7. Gearing/drive unit (10) according to one of the preceding claims, **characterized in that** the drive element (18) bears axially against an encircling collar (25) of the bearing shield (28), which collar (25) in particular surrounds an axial hole (67), through which the drive unit (18) projects, of the bearing shield (28).

8. Gearing/drive unit (10) according to one of the preceding claims, **characterized in that** the bearing shield (28) has an inner cylindrical lateral surface (37) which supports the drive element (18) radially.

9. Gearing/drive unit (10) according to one of the preceding claims, **characterized in that** the bearing shield (28) has a thrust washer (32) which is formed from a harder material than the bearing shield (28).

10. Gearing/drive unit (10) according to one of the preceding claims, **characterized in that** the drive element (18) is embodied as a worm gear (19) or spur gear which is arranged on a shaft (15).

11. Gearing/drive unit (10) according to Claim 10, **characterized in that** the shaft (15) is embodied as a spindle (16) which in particular projects at both sides (20, 60) out of the carrier tube (14).

12. Gearing/drive unit (10) according to one of Claims 10 or 11, **characterized in that** the first bearing surface (21) of the carrier tube (14) is formed as a pot-shaped bearing receptacle (22) with an axial opening (24) for the shaft (15), with the bearing receptacle (22) in particular being integrally formed in a unipartite fashion on the carrier tube (14) - preferably by means of a deep-drawing process.

13. Method for producing a gearing/drive unit (10) according to one of the preceding claims, **characterized by** the following steps:
- the drive element (18) and the bearing shield (28) are inserted into the carrier tube (14),
- the bearing shield (28) is pressed with a defined preload force (81) axially against the drive element (18) such that the latter is supported against the first bearing surface (21) of the carrier tube (14),
- the casing regions (8) of the carrier tube (14) are calked in the radial direction by means of a calking force (83) in order to generate a form-fitting action between the bearing shield (28) and the casing region (8) and to thereby fix the bearing shield (28).

14. Method according to Claim 13, **characterized in that** the casing region (8) is pressed in radially to such an extent that an undercut (87) with an end surface (89) which extends approximately perpendicular to the carrier tube (14) is formed, which end surface (89) bears axially against the bearing shield (28) over a certain width (95) and a certain depth (91).

15. Method according to one of Claims 13 or 14, **characterized in that** the carrier tube (14) has a base surface (92) with an assembly opening (93) through which the preload force (81) is imparted to the bearing shield (28) which is pre-mounted in the carrier tube (14).

## Revendications

1. Unité de transmission et d'entraînement (10) notamment pour déplacer une pièce mobile (58) dans un véhicule automobile, comportant un élément d'entraînement (18) entraîné par un module d'entraînement (42), cet élément d'entraînement étant monté à rotation dans un tube de support (14) par l'intermédiaire d'au moins un panneau de palier (28), l'élément d'entraînement (18) ayant une première butée axiale (23) qui s'appuie contre une première surface axiale de palier (21) du tube de support (14) et l'élément d'entraînement (18) comporte une seconde butée axiale (35) qui s'appuie contre une seconde surface axiale de palier (27) du panneau de palier (28),
le panneau de palier (28) étant pressé par une déformation de matière (82) du tube de support (14) contre la seconde butée axiale (35) de l'élément d'entraînement (18).

2. Unité de transmission et d'entraînement (10) selon la revendication 1,
**caractérisée en ce que**
la déformation de matière (82) est réalisée par des zones enveloppe (8) du tube de support (14) déformées radialement vers l'intérieur, les zones enveloppe (8) étant notamment prévues dans la région du diamètre maximum (6) du tube de support (14).

3. Unité de transmission et d'entraînement (10) selon la revendication 2,
**caractérisée en ce que**
la déformation de matière (82) de la zone enveloppe (8) est réalisée sous la forme d'une contredépouille (87) avec au moins une surface frontale (89) enfoncée de la zone enveloppe (8) s'appuyant sur une certaine largeur (95) et une certaine profondeur (91) axialement contre le panneau de palier (28).

4. Unité de transmission et d'entraînement (10) selon la revendication 3,
**caractérisée en ce que**
la surface enveloppe (89) est appliquée à niveau contre le côté arrière (84) du panneau de palier (28), ce côté arrière s'étendant pratiquement perpendiculairement à l'axe (76) de l'élément d'entraînement (18).

5. Unité de transmission et d'entraînement (10) selon l'une des revendications 2 à 4,
**caractérisée en ce que**
la déformation de matière (82) de la zone enveloppe (8) est formée par au moins une patte (94) avec une extrémité libre (97) s'appliquant axialement contre le panneau de palier (28).

6. Unité de transmission et d'entraînement (10) selon l'une des revendications précédentes,
**caractérisée en ce que**
l'élément d'entraînement (18) est appliqué ponctuellement, notamment par l'intermédiaire d'une butée à bille (30) contre le panneau de palier (28).

7. Unité de transmission et d'entraînement (10) selon l'une des revendications précédentes,
**caractérisée en ce que**
l'élément d'entraînement (18) est appliqué axialement contre une collerette périphérique (25) du panneau de palier (28) qui entoure notamment un orifice axial (67) du panneau de palier (28) traversé par l'élément d'entraînement (18).

8. Unité de transmission et d'entraînement (10) selon l'une des revendications précédentes,
**caractérisée en ce que**
le panneau de palier (28) comporte une surface enveloppe (37) cylindrique intérieure qui soutient radialement l'élément d'entraînement (18).

9. Unité de transmission et d'entraînement (10) selon l'une des revendications précédentes,
**caractérisée en ce que**
le panneau de palier (28) comporte une rondelle d'appui (32) en un matériau plus dur que celui du panneau de palier (28).

10. Unité de transmission et d'entraînement (10) selon l'une des revendications précédentes,
**caractérisée en ce que**
l'élément d'entraînement (18) est constitué par une roue à vis (19) ou une roue droite portée par un arbre (15).

11. Unité de transmission et d'entraînement (10) selon la revendication 10,
**caractérisée en ce que**
l'arbre (15) est réalisé sous la forme d'une broche (16) dépassant notamment des deux côtés (20, 60) du tube de support (14).

12. Unité de transmission et d'entraînement (10) selon l'une des revendications 10 ou 11,
**caractérisée en ce que**
la première surface de palier (21) du tube de support (14) est réalisée comme un logement de palier (22) en forme de pot muni d'une ouverture axiale (24) pour l'arbre (15),
le logement de palier (22) étant formé notamment en une seule pièce sur le tube de support (14) de préférence par un procédé d'emboutissage profond.

13. Procédé de réalisation d'une unité de transmission et d'entraînement (10) selon l'une des revendications précédentes,
**caractérisé par** les étapes suivantes :
- on introduit l'élément d'entraînement (18) et le panneau de palier (28) dans le tube de support (14),
- on presse le panneau de palier (28) avec une force de maintien (81), définie, axialement contre l'élément d'entraînement (18) pour que celui-ci s'appuie contre la première surface de palier (21) du tube de support (14),
- on effectue le matage de la zone enveloppe (8) du tube de support (14) dans la direction radiale en exerçant une force de matage (83) pour réaliser une liaison par la forme entre le panneau de palier (28) et la zone enveloppe (8) et bloquer ainsi le panneau de palier (28).

14. Procédé selon la revendication 13,
**caractérisé en ce qu'**
on enfonce la zone enveloppe (8) radialement jusqu'à former une surface frontale (89) qui s'étend sensiblement perpendiculairement au tube de support (14), cette surface frontale (89) s'appuyant sur une certaine largeur (95) et une certaine profondeur (91) axialement contre le panneau de palier (28).

15. Procédé selon l'une des revendications 13 ou 14,
**caractérisé en ce que**
le tube de support (14) comporte une surface formant un fond (92) munie d'un orifice de montage (93) permettant d'appliquer la force de maintien (81) sur le panneau de palier (28) pré-assemblé dans le tube de support (14).
